# EUROPEAN PATENT APPLICATION

(11) **EP 2 843 012 A1**
(43) Date of publication of application: **04.03.2015**
(21) Application number: 13781692.2
(22) Date of filing: 26.04.2013
(51) Int. Cl.: C09D 11/10, B41M 1/10, B41M 1/30

(54) **ORGANIC SOLVENT-BASED CONCENTRATED INK COMPOSITION FOR GRAVURE PRINTING AND GRAVURE PRINTING METHOD**

(30) Priority: 27.04.2012 JP 2012103731
(71) Applicant: Sakata INX Corp., Osaka-shi, Osaka 550-0002 (JP)
(72) Inventor: INOUE Takahiko, Osaka-shi Osaka 550-0002 (JP); OGAWA Toru, Osaka-shi Osaka 550-0002 (JP); HARADA Junichi, Osaka-shi Osaka 550-0002 (JP)
(74) Representative: Hart-Davis, Jason
(86) International application number: PCT/JP2013/062402
(87) International publication number: WO 2013/162003

(57) **Abstract**

The present invention provides an organic solvent-based concentrated ink composition for gravure printing which shows good print density, printability, and laminatability even in gravure printing using a shallow cylinder. The organic solvent-based concentrated ink composition for gravure printing mainly includes a pigment; binder resin; and an organic solvent. The pigment includes at least one of an organic pigment and an inorganic pigment. The binder resin includes polyurethane resin. A solution obtainable by dissolving 30 parts by mass of the polyurethane resin in 70 parts by mass of the organic solvent has a viscosity of 100 to 500 mPa·s/25°C. The concentrated ink composition has a viscosity of 10 to 1000 mPa·s/25°C and has a viscosity in gravure printing of 12 to 23 s/25°C in terms of the efflux time from a Zahn cup #3. The concentrated ink composition satisfies one of the following conditions 1 to 3:
Condition 1: the pigment being an organic pigment; the amount of the organic pigment being 5 to 20% by mass and the amount of the polyurethane resin being 3 to 20% by mass each in the organic solvent-based concentrated ink composition for gravure printing; and the amount of the polyurethane resin being 60 to 200 parts by mass for 100 parts by mass of the organic pigment;
Condition 2: the pigment being an inorganic pigment; the amount of the inorganic pigment being 5 to 70% by mass and the amount of the polyurethane resin being 3 to 20% by mass each in the organic solvent-based concentrated ink composition for gravure printing; and the amount of the polyurethane resin being 5 to 60 parts by mass for 100 parts by mass of the inorganic pigment; and
Condition 3: the pigment including both an organic pigment and an inorganic pigment; the amount of the organic pigment being 5 to 20% by mass in the organic solvent-based concentrated ink composition for gravure printing; the ratio by mass ((mass of inorganic pigment)/(mass of organic pigment)) of the organic pigment to the inorganic pigment satisfying 0 < (mass of inorganic pigment)/(mass of organic pigment) < 7.0; the amount of the polyurethane resin being 3 to 20% by mass; and the amount of the polyurethane resin being 20 to 200 parts by mass for 100 parts by mass of the whole pigments.

## Description

### TECHNICAL FIELD

The present invention relates to an organic solvent-based concentrated ink composition for gravure printing and a printing method using the ink composition. Specifically, the present invention relates to an organic solvent-based concentrated ink composition for gravure printing which shows good ink performance (density, printability, laminatability) even when a shallow printing plate is used, and a gravure printing method using the organic solvent-based concentrated ink composition for gravure printing.

### BACKGROUND ART

Tackling environmental issues is a business topic for which all the types of industries should have a social responsibility. The field of plastic film printing of course has this responsibility.

On the contrary, printing on plastic films commonly uses inks containing a large amount of organic solvent due to restriction of printability, so that it causes much damage on the environment. Thus, manufacturers of inks or printed matter attempt to solve the environmental issues by various approaches such as reducing the amount of organic solvents discharged and developing easy treating methods.

One of such approaches by ink manufacturers is to reduce the amount of more environmentally harmful organic solvents among the solvents contained in inks. In an early stage of development, for example, the ink manufacturers reduced the amount of more environmentally harmful organic solvents, such as aromatic solvents and ketone solvents, contained in inks. In a current stage, they consider not only the types and compositional ratios of organic solvents to be used instead of the harmful ones, but also all the materials used for inks, such as binder resin and additives. This results in practical use of ester-alcohol inks which contain substantially or completely no aromatic and ketone solvents.

On the other hand, printing companies attempt to solve the environmental issues by reducing as much as possible the amount of organic solvents in inks discharged to the atmosphere during printing. One example thereof is to reduce the depth (the depths of cells) of a gravure printing plate to reduce the amount of ink used during printing, thereby reducing the amount of organic solvents discharged to the atmosphere (for example, see Patent Literature 1).

In this attempt, the cell capacity is reduced and the amount of ink composition transferred during printing is reduced as the depth of the gravure printing plate is reduced. Such an approach actually can reduce the amount of organic solvents in the ink composition, but the amount of ink transferred is so small that the resulting ink film contains a small amount of colorant. This disadvantageously results in insufficient print (color) density. Thus, an ink composition containing a pigment at a high concentration is usually used for printing so as to form a thin film having a high pigment concentration.

However, such a high pigment concentration in an ink composition causes the ink to have high viscosity, relatively easily resulting in fogging or poor doctor wipe performance.

In order to prevent such high viscosity of an ink composition, one method is known in which the amounts of other solids matter are reduced. However, this method causes a reduction in the amount of binder resin in the ink composition. Such reduction then causes reduction in proportion of the binder resin to the pigment, resulting in poor cohesive force of an ink film.

### CITATION LIST

### - Patent Literature

Patent Literature 1: WO 2007/088733

### SUMMARY OF INVENTION

### - Technical Problem

As mentioned above, a printing method using a shallow gravure printing plate requires high pigment concentration in the ink. In response to such high pigment concentration, binder resin is blended in an amount that prevents the reduction in cohesive force of the ink film due to the high concentration. Unfortunately, such blending of the binder resin then causes high viscosity of the ink, resulting in easy staining on printed matters. If the amount of binder resin is reduced so as to reduce the viscosity, the cohesive force of the ink film is then also reduced, unfortunately resulting in poor wear resistance and poor laminatability in lamination processing.

Therefore, the present invention aims to provide an organic solvent-based concentrated ink composition for gravure printing which can provide good print density, printability, and laminatability as in the case of conventional solvent-based ink compositions for gravure printing even in gravure printing using a shallow cylinder.

### - Solution to Problem

The present inventors performed studies in order to solve the above problems, and have found the solution to the above problems; in other words, the problems can be solved by the use of at least one of an organic pigment and an inorganic pigment as a pigment and the use of polyurethane resin as a binder resin at a specific compositional ratio. The polyurethane resin is one which, when dissolved in an organic solvent mixture, shows lower viscosity than other polyurethane resins even at the same solids content. Finally, the present inventors have completed the present invention.

The present invention relates to an organic solvent-based concentrated ink composition for gravure printing, mainly including a pigment; binder resin; and an organic solvent,
the pigment comprising at least one of an organic pigment and an inorganic pigment,
the binder resin comprising polyurethane resin,
a solution obtainable by dissolving 30 parts by mass of the polyurethane resin in 70 parts by mass of the organic solvent having a viscosity of 100 to 500 mPa·s/25°C,
the concentrated ink composition having a viscosity of 10 to 1000 mPa·s/25°C and having a viscosity in gravure printing of 12 to 23 s/25°C in terms of the efflux time from a Zahn cup #3, and
the concentrated ink composition satisfying one of the following conditions 1 to 3:
Condition 1: the pigment being an organic pigment; the amount of the organic pigment being 5 to 20% by mass and the amount of the polyurethane resin being 3 to 20% by mass each in the organic solvent-based concentrated ink composition for gravure printing; and the amount of the polyurethane resin being 60 to 200 parts by mass for 100 parts by mass of the organic pigment;
Condition 2: the pigment being an inorganic pigment; the amount of the inorganic pigment being 5 to 70% by mass and the amount of the polyurethane resin being 3 to 20% by mass each in the organic solvent-based concentrated ink composition for gravure printing; and the amount of the polyurethane resin being 5 to 60 parts by mass for 100 parts by mass of the inorganic pigment; and
Condition 3: the pigment comprising both an organic pigment and an inorganic pigment; the amount of the organic pigment being 5 to 20% by mass in the organic solvent-based concentrated ink composition for gravure printing; the ratio by mass ((mass of inorganic pigment)/(mass of organic pigment)) of the organic pigment to the inorganic pigment satisfying 0 < (mass of inorganic pigment)/(mass of organic pigment) < 7.0; the amount of the polyurethane resin being 3 to 20% by mass; and the amount of the polyurethane resin being 20 to 200 parts by mass for 100 parts by mass of the whole pigments.

Preferably, the organic solvent-based concentrated ink composition for gravure printing of the present invention is to be diluted with an organic solvent to provide an organic solvent-based ink composition for gravure printing prior to gravure printing, wherein the organic solvent added to the concentrated ink composition for gravure printing prior to gravure printing is a solvent mixture of an ester-based organic solvent and an alcoholic organic solvent, and the ratio by mass ((ester-based solvent)/(alcoholic organic solvent)) of the ester-based solvent and the alcoholic organic solvent is 50/50 to 95/5.

The solvent mixture preferably contains 5% by mass or more of propyl acetate as an ester-based solvent.

The present invention also relates to a gravure printing method using the organic solvent-based concentrated ink composition for gravure printing of the present invention, the method including: preparing an organic solvent-based ink composition for gravure printing by diluting the organic solvent-based concentrated ink composition for gravure printing with an organic solvent; and producing printed matter by gravure printing using the organic solvent-based ink composition for gravure printing and a shallow gravure cylinder.

The term "organic solvent-based concentrated ink composition for gravure printing" herein means an ink composition concentrated such that, when it is diluted with an organic solvent or an ink medium prior to printing, it can provide a predetermined color density and viscosity. The term "organic solvent-based ink composition for gravure printing" herein means an ink composition prepared by diluting the organic solvent-based concentrated ink composition for gravure printing with an organic solvent or an ink medium to provide a predetermined color density and viscosity in gravure printing.

The viscosity of the organic solvent-based concentrated ink composition for gravure printing herein is a value measured using a B-type viscometer (TOKYO KEIKI INC.).

The organic solvent-based concentrated ink composition for gravure printing of the present invention will be described in detail below.

### <Pigment>

The pigment may be any of various inorganic pigments and organic pigments commonly used for printing inks.

Examples of the inorganic pigments include colored pigments such as titanium oxide, colcothar, Antimony red, Cadmium yellow, Cobalt blue, Prussian blue, ultramarine, carbon black, and graphite, and extenders such as silica, calcium carbonate, kaolin, clay, barium sulfate, aluminum hydroxide, and talc.

Examples of the organic pigments include soluble azo pigments, insoluble azo pigments, azo lake pigments, condensed azo pigments, copper phthalocyanine pigments, and condensed polycyclic pigments.

The amount of pigment in the organic solvent-based concentrated ink composition for gravure printing of the present invention is 5 to 20% by mass, and preferably 6 to 15% by mass, when the pigment is an organic pigment, and the amount thereof is 5 to 70% by mass, and preferably 5 to 60% by mass, when the pigment is an inorganic pigment.

For combination use of an organic pigment and an inorganic pigment, the amount of organic pigment is preferably 5 to 20% by mass and the ratio by mass ((mass of inorganic pigment)/(mass of organic pigment)) of the organic pigment to the inorganic pigment preferably satisfies 0 < (mass of inorganic pigment)/(mass of organic pigment) < 7.0.

Mainly known is combination use of an organic pigment and an inorganic extender.

If the amount of pigment in the organic solvent-based concentrated ink composition for gravure printing of the present invention is smaller than the above range, the concentrated ink composition tends to have poor pigmenting power when it is formed into an ink composition, and thus tends to be incompatible with a shallow gravure printing plate. If the amount thereof is larger than the above range, the concentrated ink composition may disadvantageously have high viscosity, resulting in easy staining on printed matters in gravure printing.

### <Binder resin>

Polyurethane resin is contained as a binder resin.

The polyurethane resin may suitably be a polyurethane resin obtainable by synthesizing a urethane prepolymer through a reaction of an organic diisocyanate compound and a polymer diol compound, and then optionally adding a chain extender and a quencher to the urethane prepolymer.

Examples of the organic diisocyanate compound include aromatic diisocyanate compounds such as tolylene diisocyanate, alicyclic diisocyanate compounds such as 1,4-cyclohexane diisocyanate and isophorone diisocyanate, aliphatic diisocyanate compounds such as hexamethylene diisocyanate, and aromatic aliphatic diisocyanate compounds such as α,α,α',α'-tetramethylxylylene diisocyanate. These compounds may be used alone or in combination of two or more. More preferred are alicyclic diisocyanate compounds, aliphatic diisocyanate compounds, and aromatic aliphatic diisocyanate compounds.

Examples of the polymer diol compound include polyalkylene glycols such as polyethylene glycol and polypropylene glycol, polyether diol compounds such as alkylene oxide (e.g., ethylene oxide or propylene oxide) adducts of bisphenol A, and polyester diol compounds such as polyester diols and polycaprolactone diols obtainable by condensation reaction of one or more dibasic acids (e.g., adipic acid, sebacic acid, and phthalic anhydride) and one or more glycols (e.g., ethylene glycol, propylene glycol, 1,4-butane diol, neopentyl glycol, and 3-methyl-1,5-pentane diol). These polymer diol compounds may be used alone or in combination of two or more.

The above polymer diol compounds may be used together with one of or a mixture of two or more of alkane diols such as 1,4-pentane diol, 2,5-hexane diol, and 3-methyl-1,5-pentane diol and low molecular weight diol compounds such as ethylene glycol, propylene glycol, 1,4-butane diol, and 1,3-butane diol.

If the organic solvent to be mentioned later is a solvent mixture of an ester-based solvent and an alcoholic solvent, a polyether diol compound is preferably used as a polymer diol compound because it tends to give a higher solubility to the resulting polyurethane resin and such a highly soluble polyurethane resin increases the number of possible designs of the ink in accordance with required properties.

Regarding the ratio between the organic diisocyanate compound and the polymer diol compound, the equivalent ratio (isocyanate index) of isocyanato groups to hydroxy groups is preferably 1.2:1 to 3.0:1, and more preferably 1.3:1 to 2.0:1. If the isocyanate index is smaller than 1.2, the resulting polyurethane resin tends to be flexible. Thus, the polyurethane resin may preferably be used together with another hard resin in some cases when the resulting ink composition provides poor blocking resistance after printing, for example.

The chain extender may be a known chain extender used in polyurethane resin as a binder for ink. Examples thereof include aliphatic diamines such as ethylenediamine, propylenediamine, tetramethylenediamine, and hexamethylenediamine, alicyclic diamines such as isophoronediamine and 4,4'-dicyclohexylmethanediamine, aromatic diamines such as toluylenediamine, aromatic aliphatic diamines such as xylenediamine, hydroxy-containing diamines such as N-(2-hydroxyethyl)ethylenediamine, N-(2-hydroxyethyl)propylenediamine, and N,N'-di(2-hydroxyethyl)ethylenediamine, and diol compounds such as ethylene glycol, propylene glycol, 1,4-butane diol, neopentyl glycol, diethylene glycol, and triethylene glycol.

Polyamines such as diethylene triamine and triethylene tetramine may be used together in an amount that does not gelatinize the polyurethane resin.

The quencher may be a known quencher used in polyurethane resin as a binder for ink. Examples thereof include monoalkylamines such as n-propylamine and n-butylamine, dialkylamines such as di-n-butylamine, alkanolamines such as monoethanolamine and diethanolamine, and monoalcohols such as ethanol.

The present invention can utilize a known method of producing polyurethane resin from the above materials. Since the hardness of the resulting polyurethane resin depends on the molecular weights, chemical structures, and equivalent ratios of the respective components, the printability and the laminatability can be adjusted by appropriately combining these components.

The polyurethane resin in the organic solvent-based concentrated ink composition for gravure printing of the present invention preferably has a weight average molecular weight of 10000 to 70000, and more preferably 20000 to 60000.

The amount of polyurethane resin in the organic solvent-based concentrated ink composition for gravure printing of the present invention is appropriately adjusted in accordance with the type and amount of the pigment to be used. The amount of polyurethane resin satisfies one of the following conditions 1 to 3. Satisfying one of the following conditions 1 to 3 allows an organic solvent-based ink composition for gravure printing, which is obtainable by diluting the organic solvent-based concentrated ink composition for gravure printing of the present invention with an organic solvent, to provide good print density, printability, and laminatability as in the case of conventional solvent-based ink compositions for gravure printing even in gravure printing using a shallow cylinder.

Condition 1: the pigment being an organic pigment; the amount of the organic pigment being 5 to 20% by mass and the amount of the polyurethane resin being 3 to 20% by mass (preferably 5 to 15% by mass) each in the organic solvent-based concentrated ink composition for gravure printing; and the amount of the polyurethane resin being 60 to 200 parts by mass (preferably 70 to 150 parts by mass) for 100 parts by mass of the organic pigment.

Condition 2: the pigment being an inorganic pigment; the amount of the inorganic pigment being 5 to 70% by mass and the amount of the polyurethane resin being 3 to 20% by mass (preferably 5 to 15% by mass) each in the organic solvent-based concentrated ink composition for gravure printing; and the amount of the polyurethane resin being 5 to 60 parts by mass (preferably 5 to 40 parts by mass) for 100 parts by mass of the inorganic pigment.

Condition 3: the pigment including both an organic pigment and an inorganic pigment; the amount of the organic pigment being 5 to 20% by mass in the organic solvent-based concentrated ink composition for gravure printing; the ratio by mass ((mass of inorganic pigment)/(mass of organic pigment)) of the organic pigment to the inorganic pigment satisfying 0 < (mass of inorganic pigment)/(mass of organic pigment) < 7.0; the amount of the polyurethane resin being 3 to 20% by mass; and the amount of the polyurethane resin being 20 to 200 parts by mass (preferably 20 to 150 parts by mass) for 100 parts by mass of the whole pigments.

When the polyurethane resin is dissolved in an organic solvent, the viscosity of this solution depends on the types and ratios of the materials used in the synthesis of the polyurethane resin, and the composition of the organic solvent to be mentioned later.

In the present invention, the viscosity of a solution of the polyurethane resin (30 parts by mass) in an organic solvent (70 parts by mass) is adjusted to 100 to 500 mPa·s/25°C. If the viscosity is lower than 100 mPa·s/25°C, the cohesive force of the ink film tends to be poor. If the viscosity is higher than 500 mPa·s/25°C, the print density on printed matters may be poor. The viscosity of the polyurethane resin herein is a value measured using a B-type viscometer (TOKYO KEIKI INC.).

In the present invention, cellulose resin, acrylic resin, polyamide resin, viscous resin, and the like resin may supplementarily be used as other binder resins.

### <Organic solvent>

Examples of the organic solvent include ketone-based organic solvents (e.g., acetone, methyl ethyl ketone, and methyl isobutyl ketone), ester-based organic solvents (e.g., methyl acetate, ethyl acetate, n-propyl acetate, n-butyl acetate, and isobutyl acetate), alcoholic organic solvents (e.g., methanol, ethanol, n-propanol, isopropanol, and butanol), and hydrocarbon solvents (e.g., toluene and methylcyclohexane).

The organic solvent-based concentrated ink composition for gravure printing of the present invention is to be diluted with an organic solvent to provide an organic solvent-based ink composition for gravure printing prior to gravure printing. In consideration of current tackling against environmental issues and printability and drying properties of inks, the organic solvent added here is preferably a solvent mixture of an ester-based organic solvent and an alcoholic organic solvent. The ratio by mass ((ester-based organic solvent)/(alcoholic organic solvent)) of the ester-based organic solvent to the alcoholic organic solvent is preferably 50/50 to 95/5.

In view of the printability of inks, 5% by mass or more of propyl acetate is preferably blended as an ester-based solvent.

In order to improve the printability, the organic solvent preferably contains 0.1 to 5% by mass of water.

### <Additives>

The organic solvent-based concentrated ink composition for gravure printing of the present invention may contain any of additives such as tackifiers, crosslinkers, lubricants, antiblocking agents, antistatic agents, and surfactants.

### <Method of producing the organic solvent-based concentrated ink composition for gravure printing of the present invention>

The organic solvent-based concentrated ink composition for gravure printing of the present invention can be produced from the above materials using any of conventionally commonly used dispersing and kneading devices.

The viscosity of the concentrated ink composition is adjusted to 10 to 1000 mPa·s by controlling the amounts of solids materials and the combination of polyurethane resin and organic solvent. If the viscosity is too low, the dispersion stability of materials such as a pigment may possibly be low. If the viscosity is too high, a large amount of diluting solvent may possibly be required for diluting the concentrated ink composition into a viscosity suitable for printing, and the resulting ink may not be suitably used with a shallow printing plate.

### <Method of producing organic solvent-based ink composition for gravure printing prior to gravure printing>

For the use in gravure printing, the organic solvent-based concentrated ink composition for gravure printing of the present invention is diluted with an organic solvent so as to have a viscosity appropriate for printing conditions at a temperature during printing. Specifically, the viscosity may be about 12 to 23 seconds, and for high-speed printing, preferably, about 14 to 16 seconds in terms of the efflux time from a Zahn cup #3.

The following will describe a gravure printing method using the organic solvent-based ink composition for gravure printing.

The organic solvent-based ink composition for gravure printing may be printed by a common gravure printing technique. The ink composition may be printed on any base, and examples thereof include polyolefin films such as polyethylene films and polypropylene films, polyester films such as polyethylene terephthalate films, polylactic acid films, and polycaprolactone films, and plastic films for printing such as nylon films and vinylon films. Of course, based on the spirit of the present invention, the base film may be a usual film or a heat-shrinkable film, and the printed film may be subjected to post-processes such as lamination and shrinking treatment.

The printing plate to be used is one (shallow printing plate) having shallower cells than those of conventional cylinders (intaglio plates produced by a usual gravure platemaking technique, and examples of such a printmaking technique include gravure engraving).

In the gravure printing method, printed matter is produced using the organic solvent-based ink composition for gravure printing and the aforementioned shallow printing plate. The printed matter produced by the above method may further be laminated by any of various laminating techniques, and the laminated matter can be used for packaging, for examples. Examples of such laminating techniques include extrusion lamination in which an anchor coating agent is applied onto the surface of printed matter, and then a molten polymer is laminated thereon; and dry lamination in which an adhesive is applied onto the surface of printed matter, and then a polymer film is attached thereon.

In the extrusion lamination, the surface of printed matter is coated with a titanium-, urethane-, imine-, or polybutadiene-based anchor coating agent as needed, and then a molten polymer is laminated thereon using a known extrusion laminating device. Another material may further be laminated thereon so that the molten resin layer is an intermediate layer.

Examples of the molten resin used in the extrusion lamination include conventionally used resins such as low density polyethylene, ethylene-vinyl acetate copolymers, and polypropylene. In particular, use of low density polyethylene, which is easily oxidized in melting to generate carbonyl groups, enhances the effects of the present invention.

In the dry lamination, the surface of printed matter is coated with a urethane- or isocyanate-based adhesive, and then a polymer film is attached thereon using a known dry laminating device. Examples of the polymer film used in the dry lamination include polyethylene films and unstretched polypropylene films. For retort pouch packaging materials, aluminum foil may be interposed between the base and a plastic film to be attached before the lamination. Such laminated products may be first formed into bags, then the contents are charged, and finally used in boiling and retort pouch uses.

### - Advantageous Effects of Invention

Use of the organic solvent-based concentrated ink composition for gravure printing of the present invention whose viscosity is within a low value range even at high concentration in gravure printing using a shallow printing plate leads to reduction in the amount of ink used and the volatile contents in the ink, and great reduction in the amount of organic solvents discharged to the atmosphere. Further, the resulting printed matter has good print density, printability, and laminatability as in the case of conventional organic solvent-based ink compositions for gravure printing.

### DESCRIPTION OF EMBODIMENTS

The present invention will more specifically be described herein below referring to, but not limited to, examples. The symbol "%" herein means "% by mass" and the term "part(s)" herein means "part(s) by mass", unless otherwise mentioned.

### <Production Example 1 of polyurethane resin varnish>

A four-neck flask equipped with a stirrer, a condenser, and a nitrogen gas introduction pipe was charged with 100 parts by mass of 3-methyl-1,5-pentylene adipate diol having an average molecular weight of 2000, 100 parts by mass of polypropylene glycol having an average molecular weight of 2000, and 44.4 parts by mass of isophorone diisocyanate. The materials were reacted at 100 to 105°C for 6 hours while nitrogen gas was introduced thereinto. The reaction product was left to cool down close to room temperature. Then, 518 parts by mass of ethyl acetate and 91 parts by mass of n-propyl alcohol were added thereto, and 13.6 parts by mass of isophorone diamine was further added to cause a chain extension reaction. Thereafter, 1.5 parts by mass of monoethanolamine was added to terminate the reaction, thereby providing a polyurethane resin varnish A (solids content: 30% by mass, viscosity: 200 mPa·s/25°C).

### <Production Example 2 of polyurethane resin varnish>

A four-neck flask equipped with a stirrer, a condenser, and a nitrogen gas introduction pipe was charged with 100 parts by mass of 3-methyl-1,5-pentylene adipate diol having an average molecular weight of 2000, 100 parts by mass of polypropylene glycol having an average molecular weight of 2000, and 44.4 parts by mass of isophorone diisocyanate. The materials were reacted at 100 to 105°C for 6 hours while nitrogen gas was introduced thereinto. The reaction product was left to cool down close to room temperature. Then, 518 parts by mass of ethyl acetate and 91 parts by mass of isopropyl alcohol were added thereto, and 15.6 parts by mass of isophorone diamine was further added to cause a chain extension reaction. Thereafter, 1.1 parts by mass of monoethanolamine was added to terminate the reaction, thereby providing a polyurethane resin varnish B (solids content: 30% by mass, viscosity: 1000 mPa·s/25°C).

### <Production example of organic solvent-based concentrated indigo ink composition for gravure printing>

First, 30 parts by mass of a pigment (Phthalocyanine blue, C.I. 15:4), 15 parts by mass of the polyurethane resin varnish A or B, and 10 parts by mass of one of solvent mixtures A to C shown in Table 1 were mixed with each other, and the mixture was kneaded using a paint shaker. Then, based on the formulation shown in Table 1, the resulting polyurethane resin varnish A or B and one of the residual solvent mixtures A to C were mixed therewith, thereby providing an organic solvent-based concentrated indigo ink composition for gravure printing of each of Examples 1 to 3 and Comparative Examples 1 and 2.

### <Production example of organic solvent-based concentrated white ink composition for gravure printing>

First, 35 parts by mass of a pigment (titanium oxide), 30 parts by mass of the polyurethane resin varnish A or B, and 10 parts by mass of a solvent mixture A or B shown in Table 1 were mixed with each other, and the mixture was kneaded using a paint shaker. Then, based on the formulation shown in Table 1, the residual solvent mixture A or B were mixed therewith, thereby providing an organic solvent-based concentrated white ink composition for gravure printing of each of Example 4 and Comparative Example 3.

### (Evaluation)

The following shows the methods of evaluating the performance of the respective organic solvent-based concentrated indigo ink compositions for gravure printing prepared in Examples 1 to 3 and Comparative Examples 1 and 2 and of the respective organic solvent-based concentrated white ink compositions for gravure printing prepared in Example 4 and Comparative Example 3. Table 1 shows the results.

### <Evaluation of performance of ink composition>

### (Viscosity of ink)

The organic solvent-based concentrated indigo ink compositions for gravure printing of Examples 1 to 3 and Comparative Examples 1 and 2 and the organic solvent-based concentrated white ink compositions for gravure printing of Example 4 and Comparative Example 3 were each individually collected in a glass bottle, and the viscosity at a liquid temperature of 25°C was measured using a B-type viscometer (TOKYO KEIKI INC.) equipped with a rotor #2 at 30 rpm.

### (Storage stability of ink)

The organic solvent-based concentrated indigo ink compositions for gravure printing of Examples 1 to 3 and Comparative Examples 1 and 2 and the organic solvent-based concentrated white ink compositions for gravure printing of Example 4 and Comparative Example 3 were each individually collected in a glass bottle, and they were stored at an atmospheric temperature of 40°C for 14 days. Based on the presence or absence of sedimentation of the pigment, the storage stability of each ink was evaluated as follows.
A: No sedimentation occurred and ink had good storage stability.
B: Sedimentation occurred and ink had poor storage stability.

### <Density and printability>

Each of the organic solvent-based concentrated indigo ink compositions for gravure printing of Examples 1 to 3 and Comparative Examples 1 and 2 and the organic solvent-based concentrated white ink compositions for gravure printing of Example 4 and Comparative Example 3 (100 parts by mass each) was diluted with one of the solvent mixtures A to C in accordance with the composition of Table 1, so that the viscosity using a Zahn cup #3 (RIGO CO., LTD.) of each composition was adjusted to 15 seconds. Then, a polyethylene terephthalate film (TOYOBO CO., LTD., E-5101, thickness: 12 µm, hereinafter referred to as a PET film) with one surface subjected to corona discharge treatment was prepared, and the ink was applied onto the treated surface of the PET film at a printing rate of 100 m/min using a gravure printing device (Higashitani Seisakusho K.K.) equipped with an engraving plate (printing plate, Helio 200 lines/inch). This printed matter is also referred to as a printed PET film.

Additionally, the printing was performed in the same conditions using the organic solvent-based concentrated indigo ink composition for gravure printing or the organic solvent-based concentrated white ink composition for gravure printing of Comparative Example 1 or Comparative Example 3 except that a different engraving plate (Helio 175 lines) was used. These examples were called Reference Examples 1 and 2.

### (Density)

For the print density, the reflection density of indigo printed matter was measured using a densitometer (RD-918, Macbeth). Also, the transmission density of white printed matter was measured using a densitometer (Macbeth TR-931, Macbeth).

### (Printability)

The printability was evaluated after the printing based on the ratio of the blurred area, which was due to ink clogging on the plate, to the printed area.
A: Completely no blur was observed.
B: Slight blur was observed.
C: Much blur was observed.

### <Laminatability>

The laminatability was evaluated based on the boiling suitability and the retort suitability of each printed PET film.

### (Boiling suitability)

Each printed PET film 1 day after the printing was coated with an isocyanate-based anchor coating agent (a mixture of TAKELAC A-3072 and TAKENATE A-3210, Mitsui Chemicals Polyurethanes, Inc.), and then polyethylene (SUMIKATHENE L705, Sumitomo Chemical Co., Ltd.) molten at 345°C was laminated thereon so as to have a thickness of 25 µm using an extrusion laminator. The workpiece was left to stand at 40°C for 1 day, thereby providing an extrusion-laminated product. This extrusion-laminated product was formed into a bag and the bag was charged with a mixture of 90% by weight of water and 10% by weight of cooking oil. Then, the bag was hot-sealed and immersed in hot water at 90°C for 30 minutes. The boiling suitability was evaluated based on the presence or absence of delamination.
A: Completely no delamination was observed.
B: Pinhole-like delamination was observed or fine short delamination was partially observed.
C: Long striped delamination was observed on the entire surface.

### (Retort suitability)

Each printed PET film 1 day after the printing was coated with a urethane-based adhesive (a mixture of TAKELAC A-616 and TAKENATE A-65, Mitsui Chemicals Polyurethanes, Inc.) in an amount corresponding to a solids content of 2.0 g/m², and then an unstretched polypropylene film (RXC-3, thickness: 60 µm, Tohcello Co., Ltd.) was attached thereto using a dry laminator. The workpiece was left to stand at 40°C for 3 days, thereby providing a dry-laminated product. This dry-laminated product was formed into a bag and the bag was charged with a mixture of 90% by weight of water and 10% by weight of cooking oil. Then, the bag was heat-sealed and immersed in pressurized hot water at 120°C for 30 minutes. The retort suitability was evaluated based on the presence or absence of delamination. The evaluation was performed on the basis of the same criteria as those for the boiling suitability.

**[Table 1]**

| | | Indigo | | | | | | White | | |
|---|---|---|---|---|---|---|---|---|---|---|
| | | Example 1 | Example 2 | Example 3 | Comparative Example 1 | Comparative Example 2 | Reference Example 1 | Example 4 | Comparative Example 3 | Reference Example 2 |
| Pigment | | 10 | 10 | 10 | 10 | 10 | 10 | 35 | 35 | 35 |
| Polyurethane resin varnish | A | 30 | 30 | 30 | - | - | - | 30 | - | - |
| | B | - | - | - | 30 | 20 | 30 | - | 30 | 30 |
| Solvent | Solvent mixture A | 60 | - | - | 60 | 60 | 60 | - | 35 | 35 |
| | Solvent mixture B | B - | 60 | - | - | - | - | 35 | - | - |
| | Solvent mixture C | - | - | 60 | - | - | - | - | - | - |
| Ink viscosity | | 35 | 34 | 35 | 100 | 30 | 100 | 70 | 150 | 150 |
| Stability | | A | A | A | A | A | A | A | A | A |
| Diluting solvent | Solvent mixture A | 25 | - | - | 50 | 25 | 50 | - | 50 | 25 |
| | Solvent mixture B | - | 25 | - | - | - | - | 25 | - | - |
| | Solvent mixture C | - | - | 25 | - | - | - | - | - | - |
| Ink viscosity in printing | | 15 | 15 | 15 | 15 | 15 | 15 | 15 | 15 | 15 |
| Printing plate (Helio) | | 200 lines | 200 lines | 200 lines | 200 lines | 200 lines | 175 lines | 200 lines | 200 lines | 175 lines |
| Printing rate (m/s) | | 100 | 100 | 100 | 100 | 100 | 100 | 100 | 100 | 100 |
| Density | | 2.31 | 2.31 | 2.31 | 2.24 | 2.30 | 2.31 | 0.36 | 0.33 | 0.36 |
| Printability | | B | A | A | B | C | B | A | B | B |
| Laminatability (boiling suitability) | | A | A | A | A | C | A | A | A | A |
| Laminatability (retort-use suitability) | | A | A | A | A | C | A | A | A | A |

| | | | | | | | | | | |
|---|---|---|---|---|---|---|---|---|---|---|
| Solvent mixture A: ethyl acetate/IPA= 75/25 (ratio by mass) Solvent mixture B: ethyl acetate/propyl acetate/IPA= 50/25/25 (ratio by mass) Solvent mixture C: propyl acetate/IPA = 75/25 (ratio by mass) | | | | | | | | | | |

As shown in Table 1, the organic solvent-based concentrated indigo ink compositions for gravure printing or the organic solvent-based concentrated white ink compositions for gravure printing in the examples showed good print density, printability, and laminatability even in gravure printing using a shallow cylinder. The ink compositions in Examples 2 and 3 using propyl acetate as a diluting solvent showed better printability than the ink composition in Example 1 containing no propyl acetate.

The organic solvent-based concentrated indigo ink composition for gravure printing of Comparative Example 1 required a large amount of organic solvent so as to have a viscosity in printing equal to that of the organic solvent-based ink composition for gravure printing of Example 1. As a result, the organic solvent-based ink composition for gravure printing had a low pigment concentration and, when used in gravure printing using a shallow cylinder, the ink composition provided poor print density. The organic solvent-based concentrated indigo ink composition for gravure printing of Comparative Example 2 was mixed with an organic solvent in the same amount as that in Example 1 to provide an organic solvent-based ink composition for gravure printing prior to printing, and the pigment concentration in the organic solvent-based ink composition for gravure printing was adjusted to the same value as in the examples. As a result, when used in gravure printing using a shallow cylinder, the ink composition showed the same print density as in Example 1, but showed poorer printability and laminatability. The organic solvent-based ink composition for gravure printing of Comparative Example 3 required a large amount of organic solvent so as to have a viscosity in printing equal to that of the organic solvent-based concentrated white ink composition for gravure printing of Example 4. As a result, the organic solvent-based ink composition for gravure printing had poor pigment concentration and, when used in gravure printing using a shallow cylinder, the ink composition provided poor print density.

With a conventional cylinder (engraving plate) as used in Reference Examples 1 and 2, even the organic solvent-based concentrated indigo ink composition for gravure printing or the organic solvent-based concentrated white ink composition for gravure printing of Comparative Example 1 or 3 showed good print density, printability, and laminatability.

### INDUSTRIAL APPLICABILITY

Use of the organic solvent-based concentrated ink composition for gravure printing of the present invention in printing using a shallow printing plate leads to sufficient print density and cohesive force of the resulting ink film, so that the present invention can solve the aforementioned problems.

In other words, printing of an organic solvent-based concentrated ink composition for gravure printing which contains an ester-alcoholic organic solvent excluding aromatic and ketone organic solvents and which has low viscosity even at high concentration using a shallow printing plate makes it possible to reduce the volatile content in the ink, reduce the amount of organic solvents discharged to the atmosphere, and reduce the environmental damage. Further, the resulting printed matter shows good print density, printability, and laminatability as in the case of conventional organic solvent-based ink compositions for gravure printing.

## Claims

1. An organic solvent-based concentrated ink composition for gravure printing, mainly comprising
a pigment;
binder resin; and
an organic solvent,
the pigment comprising at least one of an organic pigment and an inorganic pigment,
the binder resin comprising polyurethane resin,
a solution obtainable by dissolving 30 parts by mass of the polyurethane resin in 70 parts by mass of the organic solvent having a viscosity of 100 to 500 mPa·s/25°C,
the concentrated ink composition having a viscosity of 10 to 1000 rnPa·s/25°C and having a viscosity in gravure printing of 12 to 23 s/25°C in terms of the efflux time from a Zahn cup #3, and
the concentrated ink composition satisfying one of the following conditions 1 to 3:
Condition 1: the pigment being an organic pigment; the amount of the organic pigment being 5 to 20% by mass and the amount of the polyurethane resin being 3 to 20% by mass each in the organic solvent-based concentrated ink composition for gravure printing; and the amount of the polyurethane resin being 60 to 200 parts by mass for 100 parts by mass of the organic pigment;
Condition 2: the pigment being an inorganic pigment; the amount of the inorganic pigment being 5 to 70% by mass and the amount of the polyurethane resin being 3 to 20% by mass each in the organic solvent-based concentrated ink composition for gravure printing; and the amount of the polyurethane resin being 5 to 60 parts by mass for 100 parts by mass of the inorganic pigment; and
Condition 3: the pigment comprising both an organic pigment and an inorganic pigment; the amount of the organic pigment being 5 to 20% by mass in the organic solvent-based concentrated ink composition for gravure printing; the ratio by mass ((mass of inorganic pigment)/(mass of organic pigment)) of the organic pigment to the inorganic pigment satisfying 0 < (mass of inorganic pigment)/(mass of organic pigment) < 7.0; the amount of the polyurethane resin being 3 to 20% by mass; and the amount of the polyurethane resin being 20 to 200 parts by mass for 100 parts by mass of the whole pigments.

2. The organic solvent-based concentrated ink composition for gravure printing according to claim 1, which is to be diluted with an organic solvent to provide an organic solvent-based ink composition for gravure printing prior to gravure printing,
wherein the organic solvent added to the concentrated ink composition for gravure printing prior to gravure printing is a solvent mixture of an ester-based organic solvent and an alcoholic organic solvent, and
the ratio by mass ((ester-based solvent)/(alcoholic organic solvent)) of the ester-based solvent and the alcoholic organic solvent is 50/50 to 95/5.

3. The organic solvent-based concentrated ink composition for gravure printing according to claim 2,
wherein the solvent mixture contains 5% by mass or more of propyl acetate as an ester-based solvent.

4. A gravure printing method using the organic solvent-based concentrated ink composition for gravure printing according to any one of claims 1 to 3, the method comprising:
preparing an organic solvent-based ink composition for gravure printing by diluting the organic solvent-based concentrated ink composition for gravure printing with an organic solvent; and
producing printed matter by gravure printing using the organic solvent-based ink composition for gravure printing and a shallow gravure cylinder.
